# EUROPEAN PATENT APPLICATION

(11) **EP 4 335 883 A1**
(43) Date of publication of application: **13.03.2024**
(21) Application number: 22798908.4
(22) Date of filing: 27.04.2022
(51) Int. Cl.: C08F 290/06, B32B 27/00, C08G 77/50, C09J 4/02, C09J 11/06, C09J 183/04

(54) **ULTRAVIOLET RADIATION-CURABLE SILICONE COMPOSITION, CURED PRODUCT THEREOF, LAYERED BODY, OPTICAL DEVICE, AND OPTICAL DISPLAY**

(30) Priority: 07.05.2021 JP 2021078885
(71) Applicant: Dow Toray Co., Ltd., Tokyo 140-8617 (JP)
(72) Inventor: KIKUNAGA, Sayuri, Ichihara-shi Chiba 299-0108 (JP); YOKOUCHI, Yuki, Ichihara-shi Chiba 299-0108 (JP); OGAWA, Takuya, Ichihara-shi Chiba 299-0108 (JP); IIMURA, Tomohiro, Ichihara-shi Chiba 299-0108 (JP)
(74) Representative: Murgitroyd & Company
(86) International application number: PCT/JP2022/019074
(87) International publication number: WO 2022/234802

(57) **Abstract**

[Problem] To provide: a UV-curable silicone composition having storage stability and sufficient rapid curability, wherein a resulting cured product has high extensibility, maintains a strong adhesive strength under high temperature and high humidity conditions, and in which discoloration (yellowing) is suppressed, as a curable silicone composition used in an optical display or the like; and an application of a cured product thereof (OCR or the like).

[Resolution Means] A UV-curable silicone composition containing (A) a chain-like organopolysiloxane having a specific methacryloyl group-containing organic group, (B) a monofunctional or polyfunctional acrylate compound, and (C) a photopolymerization initiator, where the ratio [(a)/(b)] of (a) the number of mols of methacroyl groups and (b) the number of mols of acryloyl groups in the composition is in a range of 0.1 to 3.0; and a use of the same.

## Description

### TECHNICAL FIELD

The present invention relates to: a UV-curable silicone composition that provides a cured product with a sufficient curing rate even at low temperatures, excellent storage stability, transparency, elongation, adhesive strength, durability, and reduced discoloration (yellowing); a cured product thereof; a laminate body; and an optical device or optical display.

### BACKGROUND TECHNOLOGY

Curable silicone compositions with high transparency and high elongation of a cured product are used as adhesives or pressure sensitive adhesives for improving the visibility of an optical display. An optical display must use a thermally unstable material such as liquid crystals, organic electroluminescence, and other display units, touch panels, cover lenses, and other display forming members. Therefore, the used curable silicone composition must be cured at relatively low temperatures. Furthermore, in recent years, from the perspective of energy conservation, compositions that do not require a heating step and cure by UV irradiation have been attracting attention.

In Patent Document 1, the present applicants have proposed an optical display composition containing a hydrosilylation catalyst, in particular, a high-energy beam-activated hydrosilylation catalyst. The composition has the advantages of easy control of curing behavior and excellent reworkability when used in an assembly step of an optical display and the like, because the curing reaction is triggered by high-energy beam irradiation and strong cured adhesion proceeds after a certain time has elapsed. Furthermore, a cured product obtained by Patent Document 1 can achieve sufficient elongation and adhesive strength for practical use, and has high temperature and humidity stability and resistance to coloration (yellowing), and thus can be suitably used as an optical material.

However, in the composition in Patent Document 1, in order to achieve rapid curing, it is necessary to heat at high temperatures or to heat a composition containing a catalyst activated by irradiation with a high-energy beam to accelerate the curing reaction. If the heating step is not included, a certain amount of time is required from mutual pasting to curing adhesion between the members. Technological approaches exist to increase the curing rate, such as reducing the amount of inhibitor and the like, but a high-energy beam-activated hydrosilylation catalyst is used. Thus, even under light-shielding conditions, unintended low-temperature curing reactions can easily progress, which may impair long-term storage stability, particularly in one-component compositions.

On the other hand, UV-curable silicone compositions that do not contain a hydrosilylation catalyst are disclosed in Patent Documents 2 to 4. However, cured products obtained from these compositions have performance issues such as inferior stability under high temperature and humidity and susceptibility to coloration (yellowing) compared to silicone cured products obtained from the hydrosilylation reaction. Furthermore, these documents only disclose compositions that have a large amount of acryloyl group-containing components or contain a certain (mol%) amount or more of aryl groups.

On the other hand, Patent Document 5 discloses a composition that combines a compound having a methacroyl group and a compound having an acryloyl group, with a branched organosiloxane component as an essential component. Furthermore, Patent Document 6 discloses a composition that combines a compound having a methacroyl group and a compound having an acryloyl group. However, the elongation of cured products obtained using these compositions is small, and sufficient performance cannot be achieved as adhesives or pressure-sensitive adhesives used in optical displays and the like.

Note that none of these documents do not describe or suggest any relationship between the ratio [(a)/(b)] of (a) the number of mols of methacroyl groups and (b) the number of mols of acryloyl groups and the durability and optical properties of the cured product.

### PRIOR ART DOCUMENTS

### [PATENT DOCUMENTS]

Patent Document 1: International Patent Publication WO 2020/080348
[Patent document 2] International patent publication WO2019/130960 pamphlet
Patent Document 3: Japanese Unexamined Patent Application Publication 2021-001296
Patent Document 4: International Patent Publication WO 2018/003381 (Patent No. 6687111)
Patent Document 5: Japanese Unexamined Patent Application Publication 2014-001341 (Patent No. 5989417)
Patent Document 6: Japanese Unexamined Patent Application Publication 2017-171734 (Patent No. 6481647)

### SUMMARY OF THE INVENTION

### PROBLEM TO BE SOLVED BY THE INVENTION

In order to solve the aforementioned problems, an object of the present invention is to provide: a UV-curable silicone composition having storage stability and sufficient rapid curability at low temperatures, wherein a resulting cured material has high transparency and high extensibility, maintains strong adhesive strength even under high temperature and high humidity conditions, and in which discoloration (yellowing) is suppressed, as a curable silicone composition used in an adhesive or pressure-sensitive adhesive such as an optical display, touch panel, or the like; and an application of a cured product thereof, particularly a laminate body, optical device, optical display, and the like containing the cured product.

### MEANS FOR SOLVING THE PROBLEM

As a result of conducting diligent research on the problem described above, the present inventors arrived at the present invention. In other words, the object of the present invention can be achieved by a UV-curable silicone composition, containing:
(A) one or more chain-like organopolysiloxane selected from the following component (A1) and component (A2),
(A1) linear organopolysiloxanes expressed by the following structural formula (1-1) having a methacryloyl group-containing organic group expressed by the following formula (II-1) or (II-2) in a molecule 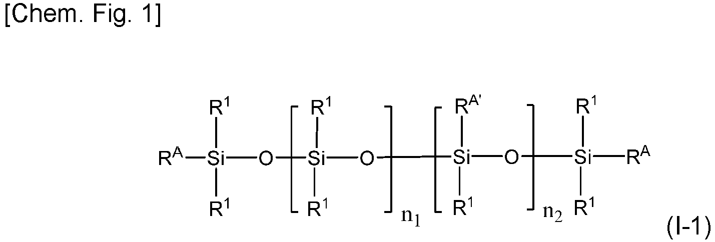
   {where R¹ independently represents a C1-C6 alkyl group, a C2-C20 alkenyl group, or a C6-C12 aryl group,
   R^{A} independently represents a C1-C6 alkyl group, a C2-C20 alkenyl group, a C6-C12 aryl group, or a methacryloyl group-containing organic group expressed by formula (II-1) or formula (II-2): 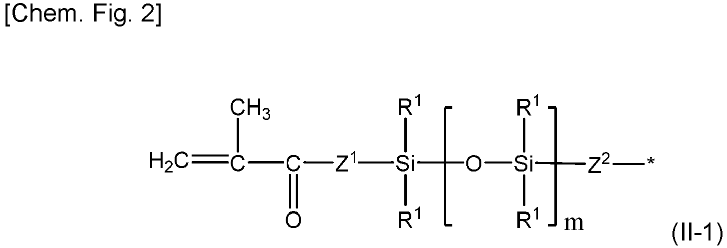
   (where m represents a positive number of 1 or more, Z¹ represents -O(CH₂)ₐ-(a represents a number in a range of 0 to 3), and Z2 represents a divalent organic group expressed by -(CH₂)_{b}- (b represents a number in a range of 2 to 10) bonded to a silicon atom configuring a main chain of a polysiloxane represented by *) 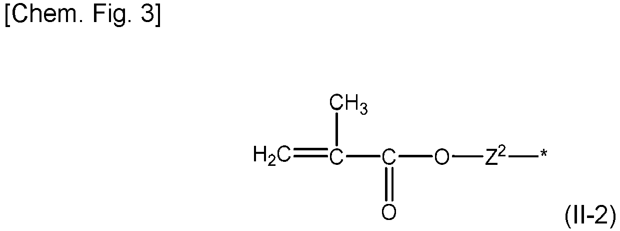
   (where Z² represents the same divalent organic group as above)
   R^{A'} represents a methacryloyl group-containing organic group expressed by formula (II-1) or formula (II-2) where the value of m + a + b in formula (II-1) is 6 or more or b in formula (II-2) is a number in a range of 6 to 10, which is bonded to a main chain of a polysiloxane via a linking group of a certain chain length or longer,
   n1 represents a positive number, and n2 represents 0 or a positive number.

However, if n2 is 0, at least one of R^{A} represents a methacryloyl group-containing organic group expressed by formula (II-1) or formula (II-2).}, and
(A2) branched organopolysiloxanes expressed by the following average unit formula (I-2) having a methacryloyl group-containing organic group expressed by the following formula (II-1) or (II-2) in a molecule and containing a branched siloxane unit
Average unit formula (I-2):

(R^{A}R¹₂SiO_{1/2})ₓ(R¹₂SiO_{2/2})_{y1}(R^{A'}R¹SiO_{2/2})_{y2}(R¹SiO_{3/2})_{z1}(R^{A'}SiO_{3/2})_{z2} (I-2)

(where R¹, R^{A}, and R^{A'} are the same groups as above.

When x, y1, y2, z1, and z2 all satisfy the following conditions of x + y1 + y2 + z1 + z2 = 1, 0 < x ≤ 0.2, 0.3 ≤ y1 + y2 < 1, 0 < z1 + z2 ≤ 0.2, and y2 + z2 = 0, at least one R^{A} represents a methacryloyl group-containing organic group expressed by formula (II-1) or formula (II-2));
(B) a monofunctional or polyfunctional acrylate compound; and
(C) a photopolymerization initiator, wherein
the ratio [(a)/(b)] of (a) the number of mols of methacroyl groups derived from component (A) to (b) the number of mols of acryloyl groups derived from component (B) in the composition is in a range of 0.1 to 3.0.

The UV-curable silicone composition according to the present invention may further contain a component selected from: (D) an adhesion-imparting agent; (E) an organopolysiloxane having a specific branched siloxane unit as an essential component; (F) a polydimethylsiloxane that may optionally have an alkenyl group; (G) a polyfunctional thiol compound having at least two thiol groups in a molecule; and other optional components.

Furthermore, the problems of the present invention are solved by a cured product of the aforementioned UV-curable silicone composition, a laminate body having an adhesive layer containing the cured product between at least two optical members, an optical device in which at least part of an optical element is sealed by the cured product, and an optical display having the laminate body.

### EFFECT OF THE INVENTION

The present invention can provide: a UV-curable silicone composition having storage stability and sufficient rapid curability at low temperatures, wherein a resulting cured material has high transparency and extensibility (= elongation), maintains strong adhesive strength even under high temperature and high humidity conditions, and in which discoloration (yellowing) is suppressed; and an application of a cured product thereof, particularly a laminate body, optical device, optical display, and the like containing the cured product.

In particular, the UV-curable silicone composition according to the present invention is useful at an optical adhesive or optical pressure-sensitive adhesive, and has the advantages of being capable of long-term stable storage, even in one-component packages, not requiring a heating step when used for sealing or mutual adhesion of optical displays and the like, being capable of undergoing processes such as mutual adhesion in a short time due to curing quickly under energy-saving and low temperature conditions to form a sealing layer, adhesive layer, or pressure-sensitive adhesive layer with excellent elongation and adhesive strength, being capable of improving industrial production processes and production efficiency of optical displays and the like, as well as further improving the reliability and durability of optical devices or optical members, such as optical displays and the like, because discoloration of a resulting cured product is suppressed and durability and adhesive strength are excellent.

### MODE FOR CARRYING OUT THE INVENTION

### [UV Curable Silicone Composition]

The UV-curable silicone composition of the present invention (hereinafter, also referred to as the "present composition") will be described below in detail.

### [Component (A)]

Component (A) is one main agent of the present composition, is used in certain functional group ratios with component (B) described later, and is a chain-like organopolysiloxane having a specific methacryloyl group-containing organic group in a molecule. Herein, the binding site of the methacryloyl group-containing organic group is a side chain or end of the chain-like siloxane molecule. However, when the methacryloyl group-containing organic group is provided on the side chain or branched siloxane unit, a structure is provided, in which a methacryloyl group is bonded via a spacer having a relatively long molecular length from a silicon atom configuring the siloxane main chain in order to achieve elongation and flexibility/adhesive strength of a cured product

More specifically, component (A) is one or more chain-like organopolysiloxane selected from the following component (A1) and component (A2). Component (A1) is a linear organopolysiloxane, and component (A2) is a branched organopolysiloxane with a branched structure by T units. Component (A) may be one selected from these components or a mixture of two or more. Note that at least a portion of component (A) may be component (A1), and all of component (A) may be component (A1) or component (A2).

### [Component (A1)]

Component (A1) is a linear organopolysiloxane expressed by the following structural formula (I-1) having a methacryloyl group-containing organic group expressed by the following formula (II-1) or (II-2) in a molecule.

### Structural Formula (I-1)

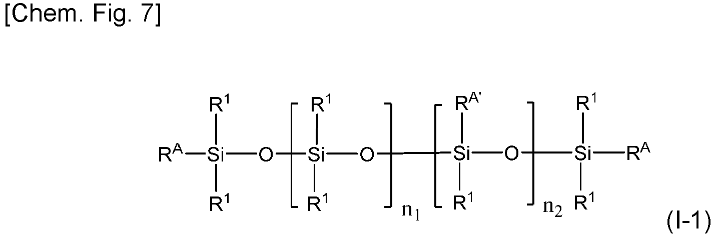

{where R¹ independently represents a C1-C6 alkyl group, a C2-C20 alkenyl group, or a C6-C12 aryl group,
R^{A} independently represents a C1-C6 alkyl group, a C2-C20 alkenyl group, a C6-C12 aryl group, or a methacryloyl group-containing organic group expressed by formula (II-1) or formula (II-2): 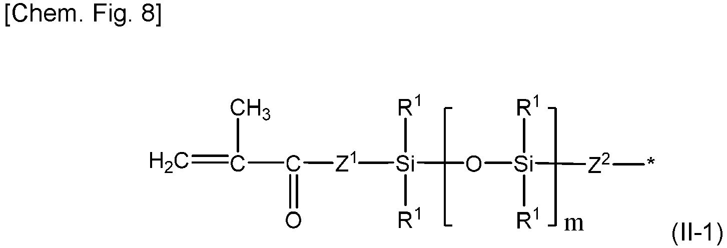
(where m represents a positive number of 1 or more, R1 represents the same groups as above, Z¹ represents -O(CH₂)ₐ- (a represents a number in a range of 0 to 3), and Z² represents a divalent organic group expressed by -(CH₂)_{b}- (b represents a number in a range of 2 to 10) bonded to a silicon atom configuring a main chain of a polysiloxane represented by *) 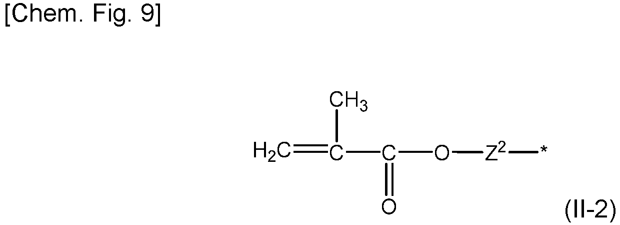
(where Z² represents the same divalent organic group as above).

The methacryloyl group-containing organic group expressed by formula (II-1) is a methacryloyl group bonded to a silicon atom configuring a main chain of polysiloxane via a silalkylene group, which is Z², a diorganosiloxane chain containing m + 1 silicon atoms and an oxygen atom (-O-; when a = 0) or an oxyalkylene group, which is Z¹. Such methacryloyl group-containing organic group can be obtained by an addition reaction of a linear organopolysiloxane having an alkenyl group that provides a silalkylene group serving as Z² by hydrosilylation reaction, and a methacryloyl group-containing compound having a SiH group at an end expressed by the following structural formula (II-1'). 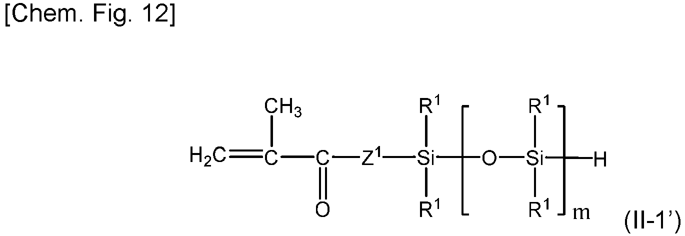 (where m represents the same number as above, and R¹ and Z¹ represent the same groups as above)

In the present invention, m represents a number in a range of 1 to 20 in the methacryloyl group-containing organic group expressed by preferred formula (II-1). As an example, when m = 1, component (A1) is obtained by adding a disiloxane compound (having a SiH group at one end) expressed by (II-3) below to a linear organopolysiloxane having an alkenyl group such as a vinyl group or the like on a side chain and/or at an end.

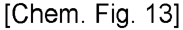

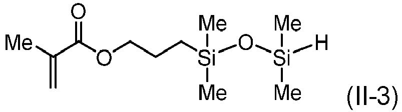

The methacryloyl group-containing organic group expressed by formula (II-2) is a methacryloyl group bonded to a silicon atom configuring the main chain of polysiloxane via an alkylene group serving as Z².

The methacryloyl group-containing organic group in component (A1) may be a methacryloyl group bonded to the main chain of linear polysiloxane via a divalent organic group having a siloxane structure expressed by formula (II-1) or a methacryloyl group bonded to the main chain of linear polysiloxane via an alkylene group expressed by formula (II-2), but the methacryloyl group-containing organic group expressed by formula (II-1) is particularly preferred. Furthermore, so long as the prescribed relationship with acryloyl groups in component (B) described later is satisfied, the number of methacryloyl group-containing organic groups in component (A1) may be any number of one or more, and the bonding position may be at both or one end of the linear polysiloxane, only on a side chain, or at a side chain and end.

R^{A'} represents a methacryloyl group-containing organic group expressed by formula (II-1) or formula (II-2) where the value of m + a + b in formula (II-1) is 6 or more or b in formula (II-2) is a number in a range of 6 to 10, which is bonded to a main chain of a polysiloxane via a linking group of a certain chain length or longer. If the methacryloyl group-containing organic group in component (A) is present in the side chain of the linear siloxane molecule, when the value of m + a + b or the value of b is less than the lower limit, a methacryloyl group serving as a reaction site and a siloxane main chain are in close proximity, resulting in a shortening of the distance between crosslinking points in a molecule. The flexibility, and particularly elongation, of the cured product obtained by the curing reaction may be impaired, and sufficient adhesive strength and reliability as an optical adhesive or optical pressure-sensitive adhesive may not be achieved. Note that when the methacryloyl group-containing organic group in component (A1) is present at the end of the linear siloxane molecule as one or both R^{A}s, a sufficient intermolecular distance can be secured between the crosslinking points for the methacryloyl group serving as reaction sites in a molecule. Therefore, even if the value of m + a + b or the value of b is less than the lower limit, the adhesive strength, including elongation and flexibility of the cured product, is not significantly impaired.

In addition to the methacryloyl group-containing organic group expressed by formula (II-1) or formula (II-2), component (A) may have as a part of R¹ or R^{A} in formula (I-1): a C1-C6 alkyl group such as a methyl group or the like; a C2-C20 alkenyl group such as a vinyl group, hexenyl group, or the like; or a C6-C12 aryl group such as phenyl group or the like. Note that a methyl group is preferred from ease of synthesis and an economic perspective, while a phenyl group is preferred from a high refractive index and an optical perspective.

n1 and n2 in formula (I-1) are degrees of polymerization of diorganosiloxane units configuring component (A), where n1 represents a positive number and n2 represents 0 or a positive number. However, if n2 is 0, at least one of R^{A} represents a methacryloyl group-containing organic group expressed by formula (II-1) or formula (II-2). n1 + n2 is a positive number greater than or equal to 0 and is not limited, but is preferably in a range of 10 to 5000, more preferably 10 to 2000, and even more preferably 10 to 1000. Note that the value of n1 + n2 may and is preferably a number that satisfies a viscosity range of component (A) described later.

The viscosity of component (A1) at 25°C is in a range of 1 to 100,000 mPa s, more preferably 10 to 50,000 mPa·s, and even more preferably 500 to 50,000 mPa s.

Herein, component (A1) may be a single component or a mixture of two or more linear organopolysiloxanes that differ in degree of siloxane polymerization, viscosity, modification ratio by R¹, R^{A}, and R^{A'} as described above, side chain/end structure, and the like.

### [Component (A2)]

Component (A2) is a branched organopolysiloxane expressed by the following average unit formula (I-2) having a methacryloyl group-containing organic group expressed by the following formula (II-1) or (II-2) in a molecule and containing a branched siloxane unit. The methacryloyl group-containing organic group in component (A2) is particularly preferably the methacryloyl group-containing organic group expressed by formula (II-1).

Average unit formula (I-2):

(R^{A}R¹₂SiO_{1/2})ₓ(R¹₂SiO_{2/2})_{y1}(R^{A'}R¹SiO_{2/2})_{y2}(R¹SiO_{3/2})_{z1}(R^{A'}SiO_{3/2})_{z2} (I-2)

In the formula above, R¹, R^{A}, and R^{A'} are the same groups as above. Furthermore, in addition to the methacryloyl group-containing organic group expressed by formula (II-1) or formula (II-2), component (A2) may have as a part of R¹ or R^{A} in formula (I-2): a C1-C6 alkyl group such as a methyl group or the like; a C2-C20 alkenyl group such as a vinyl group, hexenyl group, or the like; or a C6-C12 aryl group such as phenyl group or the like. Note that a methyl group is preferred from ease of synthesis and an economic perspective, while a phenyl group is preferred from a high refractive index and an optical perspective.

Component (A2) contains a methacryloyl group-containing organic group expressed by formula (II-1) or formula (II-2). So long as the prescribed relationship with acryloyl groups in component (B) described later is satisfied, the number of methacryloyl group-containing organic groups in component (A2) may be any number of one or more, and the bonding position may be at an end of a branched polysiloxane, on a side chain, or on a branched unit. However, as described in the functional group R^{A'}, from the perspective of securing the distance between crosslinking points in a molecule and achieving flexibility, particularly elongation, of a cured product obtained by the curing reaction of the composition containing component (A2), the methacryloyl group-containing organic groups on side chains and branched units must be bonded to a main chain of a polysiloxane via a linking group with a certain chain length or longer. In the present invention, component (A2) preferably has the aforementioned methacryloyl group-containing organic group at an end or on a side chain of the branched polysiloxane. Furthermore, when the methacryloyl group-containing organic group in component (A2) is present at the end of the branched siloxane molecule as some or all R^{A}s, a sufficient intermolecular distance can be secured between the crosslinking points for the methacryloyl group serving as reaction sites in a molecule. Therefore, even if the value of m + a + b or the value of b is less than the lower limit, the adhesive strength, including elongation and flexibility of the cured product, is not significantly impaired.

In the formula above, x, y1, y2, z1, and z2 represent the substance ratio when the sum of each siloxane unit is 1. Specifically, the following conditions are satisfied: x + y1 + y2 + z1 + z2 = 1, 0 < x ≤ 0.2, 0.3 ≤ y1 + y2 < 1, 0 < z1 + z2 ≤ 0.2, and y2 + z2 = 0, at least one R^{A} represents a methacryloyl group-containing organic group expressed by formula (II-1) or formula (II-2). Note that either one or both y2 and z2 may be 0.

Similar to component (A1), such component (A2) preferably can be obtained by addition reaction of a branched organopolysiloxane having an alkenyl group expressed by the following unit formula (I-2'):

(R^{Vi}R¹₂SiO_{1/2})ₓ(R¹₂SiO_{2/2})y₁(R^{Vi'}R¹SiO_{2/2})y₂(R¹SiO_{3/2})_{z1}(R^{Vi'}SiO_{3/2})_{z2} (I-2')

(where R¹ represents the same group as above, R^{Vi'} represents a C2-C20 alkenyl group such as a vinyl group, a hexenyl group, or the like, and R^{Vi} represents one or more groups selected from R¹ and R^{Vi'}.
When x, y1, y2, z1, and z2 all satisfy the following conditions of x + y1 + y2 + z1 + z2 = 1, 0 < x ≤ 0.2, 0.3 ≤ y1 + y2 < 1, 0 < z1 + z2 ≤ 0.2, and y2 + z2 = 0, for at least one R^{Vi}, R^{Vi'} represents a vinyl group, a hexenyl group, or other C2-C20 alkenyl group), and
a methacryloyl group-containing compound having an SiH group on an end, which is expressed by the aforementioned structural formula (II-1').

Similar to component (A1), as an example, component (A2) can be and is preferably obtained by adding a compound such as (II-3) above to the aforementioned branched organopolysiloxane having an alkenyl group such as a vinyl group or the like in a molecule.

Component (A2) is more specifically a branched organopolysiloxane expressed by the following siloxane unit formula. When expressed as

(R^{A}R¹₂SiO_{1/2})a(R¹₂SiO_{2/2})_{b1}(R^{A'}R¹SiO_{2/2})_{b2}(R¹SiO_{3/2})_{c1}(R^{A'}SiO_{3/2})_{c2}

(where R¹, R^{A}, and R^{A'} are the same groups as above),
0 < a ≤ 10, 15 < b1 + b2 < 2000, and 0 < c1 + c2 < 10, and when b2 + c2 = 0, at least one of R^{A} represents the methacryloyl group-containing organic group expressed by formula (II-1) or formula (II-2).

As an example, component (A2) may be a branched organopolysiloxane having a methacryloyl group-containing organic group only on an end M unit expressed by the siloxane unit formula below.

(R^{A}R¹₂SiO_{1/2})ₐ(R¹₂SiO_{2/2})_{b1}(R¹SiO_{3/2})_{c1}

In the formula, R¹ and R^{A} represent the same groups as above, 0 < a ≤ 10, 15 ≤ b1 < 2000, 0 < c1 ≤ 10, and at least one of R^{A} represents a methacryloyl group-containing organic group expressed by formula (II-1) or formula (II-2). Furthermore, at least one of R^{A} may and preferably represents a methacryloyl group-containing organic group expressed by formula (II-1).

The viscosity of component (A2) at 25°C is preferably 10 to 50,000 mPa s, and more preferably 100 to 2,000 mPa·s.

### [Component (B)]

Component (B) is a monofunctional or polyfunctional acrylate compound, and is one of a main agent of the present invention, which is used in certain functional group ratios with component (A).

Component (B) is not particularly limited in the structure or type thereof so long as one or more acryloyl groups are provided in a molecule, and may be used alone or in combination with two or more acrylate compounds (e.g., two or more monofunctional acrylates or a combination of monofunctional/polyfunctional acrylates).

Examples of component (B) include: methyl acrylate, ethyl acrylate, propyl acrylate, butyl acrylate, isobutyl acrylate, 2-ethylhexyl acrylate, isobornyl acrylate, and other alkyl acrylates; 2-hydroxy-3-phenoxypropyl acrylate, methoxyethyl acrylate, ethoxyethyl acrylate, 2-oxycyclopentyl methyl acrylate, and other alkyl acrylates having a substitution group; phenol EO modified acrylate, nonylphenol PO modified acrylate, 2-ethylhexyl EO modified acrylate, o-phenylphenol EO modified acrylate, paracumylphenol EO modified acrylate, and other polyoxyalkylene modified acrylates; trimethylol prohant triacrylate, trimethylolpropane PO modified triacrylate, trimethylolpropane EO modified triacrylate, isocyanuric acid EO modified triacrylate, pentaerythritol tri- and tetraacrylate, ditrimethylolpropane tetraacrylate, dipentaerythritol penta- and hexaacrylate, other trifunctional or higher acrylates, and polydimethylsiloxane having an acryloyl group at one end or both ends; and the like.

Methyl acrylate, ethyl acrylate, 2-ethylhexyl acrylate, isobornyl acrylate, methoxyethyl acrylate, ethoxyethyl acrylate, 2-oxycyclopentyl methyl acrylate, polypropylene glycol diacrylate, polyethylene glycol diacrylate, phenol EO modified acrylate, nonylphenol PO modified acrylate, 2-ethylhexyl EO modified acrylate, polypropylene glycol diacrylate, polydimethylsiloxane having an acryloyl group at one end or both ends, and the like are preferred as component (B) from the perspective of compatibility with other components and flowability. From the perspective of handling raw materials such as compatibility and the like, ease of composition design, and economy, 2-ethylhexyl acrylate is particularly preferred as component (B) in the present invention.

### [Ratio of methacroyl groups/acryloyl groups in composition]

In order to achieve the technical effect of the present invention, the composition according to the present invention is characterized in that the ratio [(a)/(b)] of (a) the number of mols of methacroyl groups derived from component (a) to (B) the number of mols of acryloyl groups derived from component (B) is in the range 0.1 to 3.0, where the upper and lower limits have the following critical significance. In other words, if [(a)/(b)] is less than the lower limit above, a sufficient curing rate cannot be obtained at low temperatures, and the high-temperature and high-humidity durability (in particular, maintenance of adhesive strength) of a cured product may be insufficient. On the other hand, if [(a)/(b)] exceeds the upper limit above, curing may be faster, but the extensibility (= elongation) and flexibility of an adhesive layer containing the cured product may be impaired, and discoloration (yellowing) may easily occur under high temperature. Therefore, if the value of [(a)/(b)] is outside the aforementioned range in the present composition, the present composition may not be suitable for use as a sealing agent, adhesive, or pressure-sensitive adhesive for optical members, and particularly those applied to optical displays, touch panels that require visibility, and the like.

In the present composition, the used amount and blending ratio (= mass ratio) of components (A) and (B) serving as main agents must be designed such that the value of [(a)/(b)] is within the range of 0.1 to 3.0. On the other hand, if the value of [(a)/(b)] is within the aforementioned range, the amount used is not particularly limited, but when the total of components (A) and (B) is 100 parts by mass, the mass ratio thereof may be in the range of (A):(B) = 50 to 99.9 : 0.1 to 50, 70 to 99.9 : 0.1 to 30, 80 to 99.9 : 0.1 to 20, or 90 to 99.9 : 0.1 to 10. In particular, the amount of component (B) used is 20 parts by mass or less, more preferably 10 parts by mass or less, and particularly preferably 5 parts by mass or less in the total (100 parts by mass) of components (A) and (B), which may further improve the elongation of the obtained cured product.

### [Component (C)]

Component (C) is a photoradical polymerization initiator, which accelerates a photocuring reaction of (meth)acryloyl groups in the composition by high-energy beam irradiation.

The photoradical polymerization initiators are known to be broadly classified into photofragmentation and hydrogen abstraction types. The photoradical polymerization initiator used in the composition of the present invention can be selected arbitrarily from those known in the technical field, and is not limited to any particular one. Examples of the photoradical polymerization initiator include α-ketol compounds such as 4-(2-hydroxyethoxy)phenyl (2-hydroxy-2-propyl) ketone, α-hydroxy-α, α'-dimethylacetophenone, 2-methyl-2-hydroxypropiophenone, 1-hydroxycyclohexyl phenyl ketone, and the like; acetophenone compounds such as methoxyacetophenone, 2,2-dimethoxy-2-phenylacetophenone, 2,2-diethoxyacetophenone, 2-methyl-1 -[4-(methylthio)-phenyl]-2-morpholinopropane-1, and the like; benzoin ether compounds such as benzoin ethyl ether, benzoin isopropyl ether, anisoin methyl ether, and the like; ketal compounds such as benzyl dimethyl ketal and the like; aromatic sulfonyl chloride compounds such as 2-naphthalenesulfonyl chloride and the like; photoactive oxime compounds such as 1-phenone-1,1-propanedione-2-(o-ethoxycarbonyl)oxime and the like; benzophenone compounds such as benzophenone, benzoylbenzoic acid, 3,3'-dimethyl-4-methoxybenzophenone, and the like; thioxanthone compounds such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and the like; camphorquinone; halogenated ketones; acyl phosphinoxides; acyl phosphonates; and the like.

The amount of component (C) used can be designed, as appropriate, according to the number of mols of (meth)acryloyl groups in the composition and the amount of high-energy beam irradiation, but an amount of 0.1 to 10 parts by mass is preferred and an amount of 0.5 to 5 parts by mass is particularly preferred with respect to the total (100 parts by mass) of components (A) and (B). If less than 0.1 part by mass, the curing reaction may be too slow, and if 5 parts by mass or more, the degree of polymerization may be low and sufficient strength may not be obtained.

### [Component (C'): Photosensitizer]

In the present composition, a photosensitizer (C') may be used in combination with an optionally selected photoradical polymerization initiator (C). Use of a sensitizer can increase the photon efficiency of the polymerization reaction, and is particularly effective when the coating thickness of the composition is relatively thick or when a relatively long-wavelength LED light source is used, because use of longer wavelength light for the polymerization reaction compared to only using a photoinitiator is feasible. Examples of known sensitizers include anthracene-based compounds, phenothiazine-based compounds, perylene-based compounds, cyanine-based compounds, melocyanine-based compounds, coumarin-based compounds, benzylidene ketone-based compounds, and (thio)xanthene or (thio)xanthone-based compounds such as isopropylthioxanthone, 2,4-diethylthioxanthone, squarylium-based compounds, (thia)pyrylium-based compounds, porphyrin-based compounds, and the like. Moreover, an arbitrary photosensitizer not limited thereto can be used in the curable organopolysiloxane composition and pressure-sensitive adhesive composition of the present invention. The amount used is arbitrary, but is commonly selected within a range where the mass ratio of component (C') to component (C) is 0 to 10, and if present, is within a range of 0.01 to 5.

### [Component (D)]

The composition according to the present invention can further contain (D) an adhesion-imparting agent. Component (D) improves the adhesive strength of a cured product obtained by curing the present composition to a substrate. In particular, by using a compound with two or more alkoxysilyl groups in a molecule, the adhesive force may be greatly improved after a certain time.

The amount of component (D) used is 0.01 to 5 parts by mass when the entire UV-curable silicone composition according to the present invention is 100 parts by mass, and an amount of 0.02 to 2 parts by mass is particularly preferred. If the amount of component (D) used is less than the lower limit above, the adhesive force to the substrate may not be sufficiently improved. If the amount exceeds the upper limit above, the compatibility with other components may deteriorate and the appearance of the cured product may be affected over time.

One or more type of component (D) that can be used in the present invention can be selected from one or more of the known adhesion-imparting agents.

Component (D) preferably contains (d1) an organic compound having two or three alkoxysilyl groups at an end of a molecular chain. Furthermore, the organic compound herein includes organic silicon compounds in addition to alkane compounds and the like. Specific examples of component (d1) include 1,2-bis(trimethoxysilyl) ethane, 1,2-bis(triethoxysilyl) ethane, 1,2-bis(methyldimethoxysilyl) ethane, 1,2-bis(methyldiethoxysilyl) ethane, 1,3-bis(trimethoxysilyl) propane, 1,4-bis(trimethoxysilyl) butane, 1,4-bis(triethoxysilyl) butane, 1-methyldimethoxysilyl-4-trimethoxysilylbutane, 1-methyldiethoxysilyl-4-triethoxysilylbutane, 1,4-bis(methyldimethoxysilyl) butane, 1,4-bis(methyldiethoxysilyl) butane, 1,5-bis(trimethoxysilyl) pentane, 1,5-bis(triethoxysilyl) pentane, 1,4-bis(trimethoxysilyl) pentane, 1,4-bis(triethoxysilyl) pentane, 1-methyldimethoxysilyl-5-trimethoxysilylpentane, 1-methyldiethoxysilyl-5-triethoxysilylpentane, 1,5-bis(methyldimethoxysilyl) pentane, 1,5-bis(methyldiethoxysilyl) pentane, 1,6-bis(trimethoxysilyl) hexane, 1,6-bis(triethoxysilyl) hexane, 1,4-bis(trimethoxysilyl) hexane, 1,5-bis(trimethoxysilyl) hexane, 2,5-bis(trimethoxysilyl) hexane, 1-methyldimethoxysilyl-6-trimethoxysilylhexane, 1-phenyldiethoxysilyl-6-triethoxysilylhexane, 1,6-bis(methyldimethoxysilyl) hexane, 1,7-bis(trimethoxysilyl) heptane, 2,5-bis(trimethoxysilyl) heptane, 2,6-bis(trimethoxysilyl) heptane, 1,8-bis(trimethoxysilyl) octane, 1,8-bis(methyldimethoxysilyl) octane, 2,5-bis(trimethoxysilyl) octane, 2,7-bis(trimethoxysilyl) octane, 1,9-bis(trimethoxysilyl) nonane, 2,7-bis(trimethoxysilyl) nonane, 1,10-bis(trimethoxysilyl) decane, 3,8-bis(trimethoxysilyl) decane, and other alkane compounds having two alkoxysilyl groups, 1,3-bis{2-(trimethoxysilyl) ethyl}-1,1,3,3-tetramethyldisiloxane, 1,3-bis{2-(methyldimethoxysilyl) ethyl}-1,1,3,3-tetramethyldisiloxane, 1,3-bis{2-(triethoxysilyl) ethyl}-1,1,3,3-tetramethyldisiloxane, 1,3-bis{2-(methyldiethoxysilyl) ethyl}-1,1,3,3-tetramethyldisiloxane, 1,3-bis{6-(trimethoxysilyl) hexyl}-1,1,3,3-tetramethyldisiloxane, 1,3-bis{6-(triethoxysilyl) hexyl}-1,1,3,3-tetramethyldisiloxane, and other disiloxane compounds having two alkoxysilyl groups.

Examples of organic compounds having three alkoxysilyl groups include 1,3,5-tris{2-(trimethoxysilyl) ethyl}-1,1,3,5,5-pentamethyl trisiloxane, 1,3,5-tris{2-(methyldimethoxysilyl) ethyl}-1,1,3,5,5-tetramethyldisiloxane, 1,3,5-tris{2-(triethoxysilyl) ethyl}-1,1,3,5,5-tetramethyldisiloxane, 1,3,5-tris{2-(methyldiethoxysilyl) ethyl}-1,1,3,5,5-tetramethyl disiloxane, 1,3,5-tris{6-(trimethoxysilyl) hexyl}-1,1,3,5,5-tetramethyl disiloxane, and other trisiloxane compounds having three alkoxysilyl groups. An example of the structure is:

(MeO)₃SiCH₂CH₂(Me)₂Si-O-SiMe(CH₂CH₂Si(OMe)₃)-O-Si(Me)₂CH₂CH₂Si(OMe)₃

(where Me represents a methyl group).

Furthermore, component (D) in the present invention can be and is preferably a reaction mixture of epoxy group-containing organoalkoxysilane and amino group-containing organoalkoxysilane disclosed in Japanese Examined Patent Publication S52-8854 and Japanese Unexamined Patent Application H10-195085, and particularly carbasilatrane derivative having a silicon atom-bonded alkoxy group or silicon atom-bonded alkenyl group in one molecule, silatrane derivative having an alkoxysilyl group-containing organic group, and the like in addition to 3-glycidoxypropyltrimethoxysilane and other silane compounds, organosiloxane oligomers, and alkyl silicates.

### [Component (E)]

The composition according to the present invention may further contain an organopolysiloxane in which a specific branched siloxane unit is essential. More specifically, the present composition may contain (E) an organopolysiloxane having a siloxane unit (T unit) expressed by RSiO_{3/2} (where R independently represents a group selected from C1-C6 alkyl groups, C2-C20 alkenyl groups, C6-C12 aryl groups, and methacryloyl group-containing organic groups expressed by formula (II-1) or (II-2))) or a siloxane expressed by SiO_{4/2} (Q unit) in a molecule. Note that it goes without saying that component (A) above is excluded from the scope of component (E).

Such component (E) may be a resin-like organopolysiloxane (e.g., an organopolysiloxane resin configured from T/Q units and other siloxane units known in the field; MQ resin, MT resin, MDT resin, MDQ resin, and the like).

A specific example of a resinous organopolysiloxane includes (E): an organopolysiloxane expressed by the average unit formula (R₃SiO_{1/2})ₚ(R₂SiO_{2/2})_{q}(RSiO_{3/2})ᵣ(SiO_{4/2})ₛ (where R independently represents a group selected from C1-C6 alkyl group, a C2-C20 alkenyl group, a C6-C12 aryl group, or a methacryloyl group-containing organic group expressed by formula (II-1) or formula (II-2), and p, q, r, and s satisfy the following conditions of p + q + r + s = 1, 0 ≤p ≤ 0.8, 0 ≤ q ≤ 0.4, 0 ≤ r ≤ 0.8, 0 ≤ s ≤ 0.6, and 0.2 ≤ r + s ≤ 0.8).
Furthermore, a small amount of a methoxy group or other alkoxy group having 1 to 6 carbon atoms, or a hydroxyl group may be bonded to a silicon atom in component (E), within a scope that does not impair an object of the present invention.

Component (E) may contain only (a) a siloxane unit expressed by R₃SiO_{1/2} (M units) and (b) a siloxane unit expressed by SiO_{4/2} (Q units), but may also contain an R₂SiO_{2/2} unit (D unit) and/or RSiO_{3/2} unit (T unit). The total amount of (a) M units and (b) Q units in component (E) is preferably 50 weight% or more, more preferably 80 weight% or more, and particularly preferably 100 weight%.

The use of component (E) is optional, the amount thereof is 0 to 50 parts by mass relative to 100 parts by mass of component (A), preferably 0 to 25 parts by mass, and particularly preferably 0 to 10 parts by mass. The use of component (E) may improve the pressure-sensitive adhesive force, mechanical strength, hardness, and the like of a cured product obtained by curing the present composition.

### [Component (F)]

The composition according to the present invention may also contain (F) a polydimethylsiloxane, which may optionally have an alkenyl group, and component (F) may be used alone or in combination with two or more components. However, component (A) and component (E) above are explicitly excluded from the scope of component (F). Such component (F) is not involved in a UV curing reaction, but the viscosity required for coating with the curable organopolysiloxane composition, as well as the hardness, crosslink density, and the like of the cured or semi-cured product can be adjusted by using the component.

Component (F) is preferably a cyclic, linear, branched, resinous, or raw rubber-like polydimethylsiloxane in which a portion of the methyl groups may be replaced with an alkenyl group having 2 to 20 carbon atoms. Component (F) is essentially a chain-like polysiloxane containing a dimethylsiloxane unit, but may have a branched structure partially containing a T unit or Q unit, and a methyl group may be partially substituted with an alkenyl group, phenyl group, hydroxyl group or alkyl halide group.

The degree of siloxane polymerization and viscosity range of component (F) are not particularly limited, but component (F) may be a liquid polydimethylsiloxane with a viscosity at 25°C in a range of 1.5 to 1,000,000 mPa s, or having a viscosity of 100,000 mPa·s or more at 25°C, or may be a raw rubber type polydimethylsiloxane having a plasticity measured in accordance with the method specified in JIS K6249 (determined by measuring the thickness to 1/100 mm when a load of 1 kgf is applied to a spherical sample of 4.2 g for 3 minutes at 25°C, multiplied by 100) in the range of 50 to 200. Furthermore, the amount of the vinyl (CH2=CH) moiety in the alkenyl group in component (F) (hereinafter referred to as "vinyl amount") is arbitrary, but may be in a range of 0.000 to 1.000 mass%. Note that a cyclic polydimethylsiloxane with a degree of siloxane polymerization of 3 to 20, which may optionally have an alkenyl group, is included in the range of component (F). Furthermore, when component (F) optionally has an alkenyl group, the bonding position of the alkenyl group can be either a side chain or an end. Note that when component (F) is used to adjust the viscosity of the composition, the viscosity thereof may be in a range of 1.0 to 100,000 mPa s, and more preferably 1.0 to 50,000 mPa s.

The use of component (F) is optional, but the amount used can be blended at an amount of 0 to 80 parts by mass when the entire UV-curable silicone composition according to the present invention is 100 parts by mass. An amount of 0 to 50 parts by mass is preferred, with a range of 0 to 20 parts by mass being particularly preferred.

### [Component (G)]

The compositions according to the present invention may further contain (G) a polyfunctional thiol compound having at least two or more thiol groups in a molecule. The polyfunctional thiol compound functions as chain transfer agent to promote a radical polymerization reaction, which can improve the curing rate and deep curability of a cured product even with a low amount of UV irradiation, and also serves as crosslinking point in the present composition.

Examples of the polyfunctional thiol compound include pentaerythritol tetrakis(3-mercaptobutyrate), 1,4-bis(3-mercaptobutyryloxy)butane, 1,3,5-tris(2-(3-sulfanylbutanoyloxy)ethyl)-1,3,5 triazinane-2,4,6-trione, trimethylolpropane tris(3-mercaptobutyrate), and the like.

The use of component (G) is optional, the amount thereof is 0 to 20 parts by mass relative to 100 parts by mass of component (A), preferably 0 to 10 parts by mass, and particularly preferably 0 to 5 parts by mass.

### [Other Optional Components]

The UV-curable organopolysiloxane composition according to the present invention may optionally contain components other than the components described above to an extent that does not impair the technical effects of the present invention. For example, the composition may contain: an adhesion promoter; a non-reactive organopolysiloxane other than component (F) such as a polydimethyldiphenylsiloxane; an antioxidant such as a phenol-type, a quinone-type, an amine-type, a phosphorus-type, a phosphite-type, a sulfur-type, or a thioether-type antioxidant; a light stabilizer such as triazoles or benzophenones; a flame retardant such as a phosphate ester-type, a halogen-type, a phosphorus-type, or an antimony-type flame retardant; and one or more types of antistatic agents consisting of a cationic surfactant, an anionic surfactant, a non-ionic surfactant, or the like.

Furthermore, so long as an object of the present invention is not impaired, if necessary, the present composition may contain conventionally known additives including: metal oxide fine powder such as fumed silica, wet silica, and the like; an alkenyl group-containing low molecular weight siloxane as a reactive diluent such as 1,1,3,3-tetramethyl-1,3-divinyldisiloxane, 1,3,5,7-tetramethyl-1,3,5,7-tetravinylcyclotetrasiloxane, and the like; and a hindered phenol compound acting as conservation stability improvers such as 2,6-ditert-butyl-4-methylphenol, 2,6-ditert-butyl-4-hydroxymethylphenol, 2,6-bis(hydroxymethyl)-p-cresol, and the like, along with a heat-resistant improver such as N-nitrosophenylhydroxylamine aluminum salt and the like.

The composition according to the present invention can be designed as a composition with little or no solvent because the constituent components have relatively low viscosity, but an organic solvent may be optionally added. The organic solvent may be used as a diluent to disperse or dissolve each component in order to improve the coatability and wettability of the composition on the substrate, or may be unavoidably included as solvents associated with other raw material components.

While not particularly limited, as long as the technical effects of the present invention are not impaired, the type of organic solvent used herein may be a compound which is soluble with all of the constituent components in the composition or a portion of the constituent components, and a type having a boiling point of 80°C or higher and of 200°C or lower is preferably used. The type of solvent can be a non-halogenated or halogenated solvent, aromatic hydrocarbon solvent, aliphatic hydrocarbon solvent, ester solvent, alcohol solvent, ether solvent, chlorinated aliphatic hydrocarbon solvent, volatile oil solvent, or the like, and combinations of two or more types can be used depending on the coatability, wettability, and the like.

### [Viscosity of present composition]

Although the viscosity of the present composition at 25°C is not limited, the viscosity is preferably 100,000 mPa·s or less, within a range of 10 to 100,000 mPa s, or within a range of 500 to 50,000 mPa·s. This is because, if the viscosity of the present composition is above the lower limit of the aforementioned range, the mechanical properties of the cured product obtained will be good; however, if, on the other hand, the viscosity is below the upper limit of the aforementioned range, the handleability of the composition obtained will be enhanced and air is less likely to be entrained in the cured product. Note that these viscosities can be measured by a rotational viscometer.

### [Preparation and dosage form of present composition]

The present composition can be prepared by uniformly mixing components (A) to (C), and if necessary, another arbitrary component. When preparing the present composition, mixing can be performed at room temperature using various types of stirrers or kneaders, and if necessary, mixing can be performed while heating. Furthermore, the order of combining the various components is not restricted, and mixing can be performed in any order.

Furthermore, the present composition can be a one-component composition in which all of the components are blended in the same container, or can be a multi-component composition which mixes during use in view of storage stability and the like. Unlike compositions using a UV-activated hydrosilylation-reaction catalyst described in Patent Document 1 and the like, the compositions according to the present invention can be stored under light-shielding conditions for a long period of time, even when used as a one-component composition.

### [Use of the Present Composition]

The present composition is useful as various potting agents, sealants, and adhesives/pressure-sensitive adhesives, is preferably useful as an optical sealing agent, optical pressure-sensitive adhesive/adhesive, and is particularly useful as an optical sealing agent or optical pressure-sensitive adhesive/adhesive for a display. The present composition cures quickly by irradiation with a high-energy beam such as UV rays even at low temperatures, and a cured product thereof has high elongation, excellent flexibility and adhesive strength, little coloration (yellowing) at high temperatures or at high temperature and high humidity, and little turbidity. Therefore, the composition is suitable as a material for forming an intermediate layer between an image display unit and a protective part of a display, and such usage may be referred to as optically elastic resin ("OCR (Optically Clear Resin)"). Furthermore, since the curing rate is fast even without a heating step, no additional heating step or the like is required for curing, and a process from mutual adhesion between members to curing and adhering by UV irradiation can be shortened, making it suitable for energy-saving processes and improving industrial production efficiency.

The present composition can be used not only for liquid crystal displays but also for the display field in general, such as organic EL displays, electronic paper displays, plasma displays, and the like.

The present composition can be cured quickly without a heating process, and thus can be applied as a coating of substrates with inferior heat resistance. The type of substrate is generally a transparent substrate such as glass, along with synthetic resin films, sheets, and transparent electrode coatings.

The coating method of the present composition is particularly limited, and examples include dispensing, gravure coating, microgravure coating, slit coating, slot die coating, screen printing, stencil printing, and comma coating. Note that when the present composition is used as an OCR for adhering members of optical displays and the like together, a resin member can be optionally formed in the form of a frame on a display module, a so-called dam material, or the present composition can be formed on an inner side without a dam and a front surface panel can be adhered thereon. Furthermore, depending on the site to be injected or arranged, a dispenser such as a syringe, a cartridge, or the like may be used to inject and fill the curable silicone composition according to the present invention, and the OCR may be arranged. These processes can and are preferably similar to the OCR arrangement or injection step disclosed in, for example, Patent Document 1 (International Patent Publication WO2020/080348).

The composition of the present invention can be cured by irradiating with UV rays. As the UV ray generating source, a high-pressure mercury lamp, a medium-pressure mercury lamp, a Xe-Hg lamp, a deep UV lamp, a UV-LED light source, or the like is suitable, and in particular, UV ray irradiation with a wavelength of 280 to 400 nm, preferably with a wavelength of 300 to 400 nm is preferable, and a light source with a plurality of light emission bands may be used. Furthermore, when curing the composition of the present invention, the UV rays may be irradiated directly onto the arranged composition, may be irradiated through a translucent member, or may be deep cured by irradiating UV rays through gaps between members, and the irradiation form can be selected, as appropriate, according to the mutual adhesion and a curing process.

The amount of UV irradiation for curing the composition of the present invention can be designed, as appropriate, according to the amount of coating, coating thickness, curing process, desired cycle time, and the like, but the cumulative light amount is 100 mJ/cm² to 20,000 mJ/cm², more preferably 1,000 mJ/cm² to 15,000 mJ/cm², and even more preferably 2,000 mJ/cm² to 10,000 mJ/cm².

### [Cured Product]

The cured product of the invention (hereinafter referred to as "the cured product") The cured product of the present invention is formed by curing the curable silicone composition described above. While the shape of the cured product is not limited, examples thereof include sheets, films, tapes, and lumps. Furthermore, integrating with various types of substrates is also possible.

The present composition is preferably used as an optically elastic resin ("OCR" (Optically Clear Resin)) having protection, sealing, adhesion/pressure-sensitive adhesion and other functions as described above, and is preferably cured to form an elastomeric (elastic) resin member or a gel-like resin member. The degree of needle penetration at 25°C as stipulated in JIS K2220 (hereinafter, simply referred to as the "degree of needle penetration") for the silicone resin member after curing is preferably within a range of 5 to 70. The degree of needle penetration is more preferably within a range of 10 to 60 or 10 to 50. The cured product (= silicone resin member) has moderate flexibility and durability, and has excellent adhesion/adhesion retention and followability between members, and thus can be used as a gap sealant composition for a display device to achieve a reliable sealing effect.

As a method of forming the present cured product, a film-like substrate, tape-like substrate, or sheet-like substrate can be coated with the present composition and then cured by UV irradiation (preferably with the light source and irradiation amount described above), for example. Furthermore, an example includes a case in which the present composition is first arranged between two substrates and then cured with both substrates firmly bonded. There are also cases in which the present composition is smoothly applied to at least one surface of the substrate. Thereafter, both substrates are adhered together and cured by UV irradiation to achieve a strong adhesion. While not limited thereto, the film thickness of this cured product is preferably 1 to 100,000 µm, more preferably 50 to 30,000 µm. Note that when the present cured product is formed between members, as described above, a resin member is optionally formed in the form of a frame on a display module, a so-called dam material, or the present composition is arranged on an inner side without a dam and a front surface panel can be adhered thereon, which may be and is preferably cured by UV irradiation from a light-transmitting side that can be irradiated with UV rays. A formation process of such a cured product can and is preferably similar the curing process after arrangement or injection disclosed in, for example, Patent Document 1 (International Patent Publication WO2020/080348).

### [Laminate Body]

The laminate body according to the present invention has a first optical member, a second optical member, and an adhesive layer containing the present cured product arranged between these two optical members. Herein, these optical members may be transparent or non-transparent, and one or both may be transparent depending on the desired structure and UV irradiation process. A suitable laminate body, optical members used therein, and formation process for the laminate body are common, for example, with the laminate body and the like disclosed in Patent Document 1 (International Patent Publication WO2020/080348). Some or all of the composition and cured product used in the laminate body disclosed in Patent Document 1 can be replaced by the composition of the present invention or the present cured product and can be referred to as preferred embodiments in the present invention. In such a case, it goes without saying that curing of the composition in the present invention by UV irradiation should be performed instead of or together with curing of the composition in Patent Document 1.

### [Optical Device]

An optical device according to the present invention (hereinafter may be referred to as the "present optical device") is provided with: a substrate; an optical element disposed on the substrate; and the present cured product that seals at least a part of the optical element. The present optical device is preferably an optical semiconductor device. A suitable optical device and structure thereof are common, for example, with the optical device disclosed in Patent Document 1 (International Patent Publication WO2020/080348). Some or all of the composition and cured product used in various optical devices disclosed in Patent Document 1 can be replaced by the composition of the present invention or the present cured product and can be referred to as preferred embodiments in the present invention.

### [Optical Display]

The optical display according to the present invention (hereinafter referred to as the "present optical display") has the aforementioned laminate body, preferably further has one or more image display panels, and may also have one or more touch panels in addition thereto. A suitable type and structure of the present optical display are common, for example, with the optical display disclosed in Patent Document 1 (International Patent Publication WO2020/080348). Some or all of the composition and cured product used in various optical displays disclosed in Patent Document 1 can be replaced by the composition of the present invention or the present cured product and can be referred to as preferred embodiments in the present invention.

### [INDUSTRIAL APPLICABILITY]

The present composition has excellent storage stability as a one-component composition and cures quickly even at low temperatures by UV irradiation. Therefore, when manufacturing a laminate body, optical device or optical display, the curing/adhesion process by UV irradiation can be performed in a short time from arrangement and mutual adhesion of the composition in an uncured state, resulting in excellent industrial productivity and production efficiency. Furthermore, a cured product obtained by curing the present composition has small curing shrinkage, and thus has general advantages of silicone-based OCR in which display defects such as defects in displays and optical members, unevenness of images, and the like can be suppressed. Furthermore, the cured product has high elongation, and thus has high followability to an adhesive member, has strong adhesive force, and effectively suppresses release between members (between layers). Moreover, the cured product maintains transparency even when exposed to high temperatures and humidity, and is resistant to turbidity and coloration. Therefore, it is useful as an adhesive or pressure-sensitive adhesive for optical displays and other display devices (including touch panels) and optical semiconductor devices (including microLEDs), and cured products thereof are useful as OCR materials for these devices. Furthermore, the present cured product can be suitably used as an optical adhesive layer for in-vehicle displays, so-called head-up displays using projector lenses, and the like.

### EXAMPLES

Hereinafter, the present invention is described in detail with reference to the examples and comparative examples, but the present invention is not limited to the following examples. Furthermore, measurements and evaluations in the following examples and the like were performed as follows.

### [Curing behavior of composition]

The UV-curable silicone composition was placed on a rheometer (MCR302 manufactured by Anton Paar), set such that a gap was 0.1 mm using a 15 mm diameter parallel plate jig, and then irradiated with 365 nm UV light from a UV light source device (REX-250 manufactured by Asahi Spectra Co., Ltd.) to measure the curing behavior.

### [Shear Adhesive Strength and Elongation of Cured Product]

The UV-curable silicone composition was filled between two glass plates (75 mm long × 25 mm wide × 2 mm thick) such that the dimensions of a cured silicone product were 200 mm² and 200 µm thick, UV light with a 365 nm wavelength was irradiated to 4,000 mJ/cm² or 8,000 mJ/cm² at approximately 130 mW/cm² using a UV-LED UV irradiation device (manufactured by JATEC Co., Ltd.) to prepare a test piece containing a cured product interposed between the two glass plates. The test piece was subjected to a shear adhesion test in accordance with a method specified in JIS K6850, and the shear adhesive strength of the cured product was measured. At the same time, the ratio of the deformation at break to the thickness of the cured product was recorded as the elongation (%). Initial value measurements were taken three days after test piece preparation.

### [Durability test of cured product]

Test pieces prepared by the same method as the measurement of shear adhesive strength and elongation of cured products were left in a constant temperature and humidity oven after three days of curing, and removed from the oven after 250 hours at 85°C and 85% relative humidity. Three hours after removal, a shear adhesion test was performed in accordance with a method specified in JIS K6850, and the shear adhesive strength of the cured product was measured.

### [Degree of yellowing of cured product]

A test piece in which the curable silicone composition was filled between two glass plates (75 mm long × 50 mm wide × 2 mm thick, Corning Incorporated, Eagle XG) such that the dimensions of a cured silicone product were 35 mm long × 35 mm wide × 1.5 mm thick was irradiated with UV light with a 365 nm wavelength to 4,000 mJ/cm² or 8,000 mJ/cm² at approximately 130 mW/cm² using a UV-LED UV irradiation device (manufactured by JATEC Co., Ltd.), and then placed in a 100°C oven for 500 hours. Therefore, it was removed from the oven and measured for degree of yellowing/YI (E313-96) on a CM-5 (manufactured by Konica Minolta, Inc.).

### [Component (A): Preparation of components (A-1) to (A-6)]

In the following Synthesis Examples 1 to 6, disiloxane (having an SiH group at one end) expressed by (II-3) below was used as a raw material. Components (A-1) to (A-6) having a methacryloyl group-containing organic group with a methacryloyl group bonded to a siloxane main chain via a silalkylene group and disiloxane structure were synthesized by the addition reaction of silicon atom-bonded alkenyl groups with the raw material.

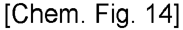

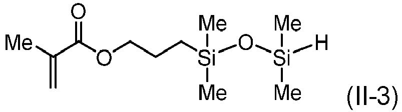

### (Synthesis Example 1)

100.00 g of polydimethylsiloxane (amount of Vi groups: 17.5 mmol) blocked at both ends by dimethyl vinyl and 4.32 g (16.6 mmol) of a disiloxane expressed by formula (II-3) were mixed. 1 ppm of platinum/1,3-divinyltetramethyldisiloxane complex was added, in terms of platinum atom mass, to the mixture, and then the reaction mixture was stirred at 40°C for 6 hours. The disappearance of the peak derived from the SiH group in the IR spectrum confirmed the completion of the reaction, and 104.32 g of component (A-1) was obtained.

### (Synthesis Example 2)

100.00 g (amount of Vi groups: 5.4 mmol) of polydimethylsiloxane blocked at both ends by dimethyl vinyl and 1.33 g (5.1 mmol) of a disiloxane expressed by formula (II-3) were mixed, and 101.33 g of component (A-2) was obtained in the same manner as Synthesis Example 1.

### (Synthesis Example 3)

100.00 g (amount of Vi groups: 3.6 mmol) of polydimethylsiloxane blocked at both ends by dimethyl vinyl and 0.89 g (3.4 mmol) of a disiloxane expressed by formula (II-3) were mixed, and 100.89 g of component (A-3) was obtained in the same manner as Synthesis Example 1.

### (Synthesis Example 4)

100.00 g (amount of Vi groups: 35.3 mmol) of a copolymer of 5-hexenylmethylsiloxane and polydimethylsiloxane blocked at both ends by 5-hexenyldimethyl and 8.74 g (33.6 mmol) of a disiloxane expressed by formula (II-3) were mixed. 1 ppm of platinum/1,3-divinyltetramethyldisiloxane complex was added, in terms of platinum atom mass, to the mixture, and then the reaction mixture was stirred for 4 hours while the temperature was adjusted to be 40°C or higher and 60°C or lower. The disappearance of the peak derived from the SiH group in the IR spectrum confirmed the completion of the reaction, and 100.56 g of component (A-4) was obtained.

### (Synthesis Example 5)

100.00 g (amount of Vi groups: 18.5 mmol) of polymethylphenylsiloxane blocked at both ends by dimethyl vinyl and 3.86 g (14.8 mmol) of a disiloxane expressed by formula (II-3) were mixed, and 103.86 g of component (A-5) was obtained in the same manner as Synthesis Example 1.

### (Synthesis Example 6)

100.00 g (amount of Vi groups: 7.4 mmol) of a copolymer of diphenylsiloxane and a polydimethylsiloxane blocked at both ends by dimethyl vinyl and 1.54 g (5.9 mmol) of a disiloxane expressed by formula (II-3) were mixed, and 101.54 g of component (A-6) was obtained in the same manner as Synthesis Example 1.

### (Synthesis Example 7)

100.00 g of a polydimethylsiloxane blocked with a dimethyl vinyl containing a branched siloxane unit expressed by average unit formula (Me₃SiO_{1/2})₁(Me₂ViSiO_{1/2})_{1.5}(Me₂SiO_{2/2})₁₀₈(MeSiO_{3/2})₃ (amount of Vi groups: 22.7 mmol) and 5.78 g (22.2 mmol) of a disiloxane expressed by formula (II-3) were mixed together. 1 ppm of platinum/1,3-divinyltetramethyldisiloxane complex was added, in terms of platinum atom mass, to the mixture, and then the reaction mixture was stirred at 40°C for 6 hours. The disappearance of the peak derived from the SiH group in the IR spectrum confirmed the completion of the reaction, and 105.78 g of component (A-7) was obtained.

In addition, the following components were used in the Examples and Comparative Examples.
(B-1) 2-Ethylhexyl acrylate
(B-2) Dimethylpolysiloxane polymer containing an acryloyl group expressed by the following formula 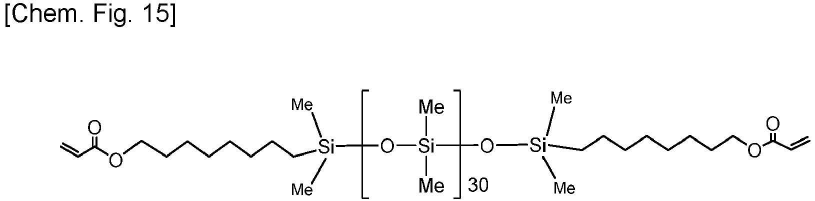
(C): 2-hydroxy-2-methyl-1-phenyl-propan-1-one
(D) 1,6-bis(trimethoxysilyl)hexane
(F) polydimethylsiloxane with vinyl-functional groups at both ends with viscosity of 10,000 mPa·s
(G) 1,4-bis(3-mercaptobutyryloxy)butane (Karenz MT(R)BD1 manufactured by Showa Denko K.K.)

### [Examples 1 to 8, Comparative Examples 1 to 5]

Each UV-curable silicone composition was prepared by uniformly mixing the components above in the compositions (parts by mass) shown in Tables 1 and 2, and the [(a)/(b)] and storage elastic modulus ratios are both shown in the tables. Herein, the storage elastic modulus ratio is the ratio of the value of the storage elastic modulus at the time of irradiation with 8,000 mJ/cm² of 365 nm UV light to that at the time of irradiation with 16,000 mJ/cm², and represents the degree of progression of the curing reaction with increasing UV irradiation dose.

Table 1 Composition of UV-curable silicone composition (Examples 1 to 10)

**[Table 1]**

| Component | Example 1 | Example 2 | Example 3 | Example 4 | Example 5 | Example 6 | Example 7 | Example 8 | Example 9 | Example 10 |
|---|---|---|---|---|---|---|---|---|---|---|
| (A-1) | 20 | 29 | 21 | 95 | | | 29 | 16 | 20 | 20 |
| (A-2) | 69 | 57 | 68 | | | | 57.5 | 55.2 | 70 | 70 |
| (A-3) | | | | | | | | | | |
| (A-4) | 10 | 10 | 10 | | | | 10 | 8 | 8 | |
| (A-5) | | | | | 99 | | | | | |
| (A-6) | | | | | | 99 | | | | |
| (A-7) | | | | | | | | | | 8 |
| (B-1) | 1 | 5 | 0.9 | 5 | 1 | 1 | | 1 | 2.5 | 2.5 |
| (B-2) | | | | | | | 3.5 | | | |
| ^{©} | 1 | 1 | 1 | 1 | 1 | 1 | 1 | 0.8 | 0.5 | 0.5 |
| (D) | 0.05 | 0.05 | 0.05 | 0.05 | 0.05 | 0.05 | 0.05 | 0.04 | 0.05 | 0.05 |
| (F) | | | | | | | | 20 | | |
| (G) | | | 0.1 | | | | | | | |
| Total | 101.05 | 102.05 | 101.05 | 101.05 | 101.05 | 101.05 | 101.05 | 101.04 | 101.05 | 101.05 |
| [(a)/(b)]* | 0.55 | 2.6 | 0.49 | 1.75 | 0.39 | 0.93 | 0.24 | 0.55 | 1.53 | 1.73 |
| Ratio of storage elastic modulus (8 => 16 J/cm2) | 52% | 99% | 70% | 98% | 95% | 89% | 52% | 44% | 68% | 65% |

| | | | | | | | | | | |
|---|---|---|---|---|---|---|---|---|---|---|
| *Ratio of (a) the sum of the number of mols of methacroyl groups in each component (A) to (b) the sum of the number of moles of acryloyl groups in each component (B) | | | | | | | | | | |

Table 2 Composition of UV-curable silicone composition (Comparative Examples 1 to 5)

**[Table 2]**

| Component | Comparative Example 1 | Comparison Example 2 | Comparative Example 3 | Comparative Example 4 | Comparative Example 5 |
|---|---|---|---|---|---|
| (A-1) | 30 | 25 | 32 | | |
| (A-2) | 60 | 60 | 50 | | |
| (A-3) | | 10 | | | |
| (A-4) | 10 | | 10 | | |
| (A-5) | | | | 90 | |
| (A-6) | | | | | 90 |
| (B-1) | | 5 | 8 | 10 | 10 |
| (C) | 1 | 1 | 1 | 1 | 1 |
| (D) | 0.05 | | 0.05 | 0.05 | 0.05 |
| Total | 101.05 | 101 | 101.05 | 101.05 | 101.05 |
| [(a)/(b)]* | 0 | 3.65 | 4.02 | 4.27 | 10.22 |
| Ratio of storage elastic modulus (8 => 16 J/cm2) | 16% | 99% | 99% | 96% | 96% |

| | | | | | |
|---|---|---|---|---|---|
| *Ratio of (a) the sum of the number of mols of methacroyl groups in each component (A) to (b) the sum of the number of moles of acryloyl groups in each component (B) | | | | | |

Table 3 shows the results of the degree of yellowing (YI) of the UV-curable silicone compositions in the following examples and comparative examples after leaving each cured product with a thickness of 1.5 mm at 100°C for 500 hours according to the aforementioned test method for [Degree of Yellowing of Cured Product] above.

### Table 3 Degree of yellowing of cured product

**[Table 3]**

| | Example 1 | Example 2 | Example 7 | Comparative Example 1 | Comparison Example 2 | Comparative Example 3 | Comparative Example 4 | Comparative Example 5 |
|---|---|---|---|---|---|---|---|---|
| YI after 500 hours at 100°C | 1.2 | 2.2 | 2.3 | 1.1 | 8.1 | 4.7 | 5.0 | 3.6 |
| (E313-96) | | | | | | | | |

In Table 4, the high-temperature durability and elongation of test pieces containing each cured products with thicknesses of 200 µm were evaluated or measured in accordance with the test methods indicated in [Shear adhesive strength and elongation of cured product] and [Durability test of cured product] above and the following criteria, for the UV-curable silicone compositions according to the following examples and comparative examples. Note that for the evaluation of adhesive strength and elongation, the results of measurement at a tensile rate of 100 mm/min for each test piece were used.

### [Evaluation criteria of high-temperature and high-humidity durability]

If the ratio [(p)/(q)] of (p) the adhesive strength of each test specimen after 250 hours of exposure at 85°C, 85% relative humidity to (q) the adhesive strength after 3 days at 25°C was 50% or more, the adhesive strength was evaluated as "O" in Table 4 as the adhesive strength did not decrease significantly under high temperature and high humidity conditions. If the value was less than 50%, the adhesive strength was evaluated as "×" in Table 4 as the adhesive strength was significantly reduced.

### Table 4 High-temperature and high-humidity durability and elongation of cured product

**[Table 4]**

| | Example 1 | Example 7 | Example 8 | Comparative Example 1 |
|---|---|---|---|---|
| High-temperature and high-humidity durability | ○ | ○ | ○ | × |
| Cured product elongation* | 980% | 870% | 1260% | 1260% |

| | | | | |
|---|---|---|---|---|
| *Measurement results after leaving the test piece at 25°C for three days | | | | |

### [Change in storage elastic modulus by UV irradiation: Curing rate]

As shown in Tables 1 and 2, when the ratio [(a)/(b)] of (a) the number of mols of methacryloyl groups to (b) the number of mols of acryloyl groups in the composition was 0 (Comparative Example 1), the rate of increase in the storage elastic modulus was small relative to the UV irradiation dose, and the curing rate was insufficient. On the other hand, for compositions where [(a)/(b)] is 0.1 or higher (including the examples), the storage elastic modulus increased significantly enough in relation to the UV irradiation dose, and the curing rate was sufficient for practical use.

### [Evaluation of yellowing of cured product: Degree of yellowing]

As shown in Table 3, in the case where the ratio [(a)/(b)] of (a) the number of mols of methacroyl groups to (b) the number of mols of acryloyl groups above is within the scope of the claims of the present application (examples in the present application), the degree of yellowing was slight even when the test pieces containing each cured product was left at 100°C for 500 hours. On the other hand, in compositions where [(a)/(b)] was 3 or more (Comparative Examples 2 to 5 of the present application), the cured product yellowed noticeably. The cured products according to the comparative examples have a YI (E313-96) exceeding 3 at 1.5 mm thickness, and when applied to optical displays and other applications, there is concern that they may discolor more easily than the cured products according to the examples of the present application, resulting in problems such as reduced transparency, visibility, and the like.

### [Adhesive strength (high-temperature and high-humidity durability) and extensibility of cured product]

As shown in Table 4, the cured products according to the examples of the present application showed no significant decrease in adhesive strength after 250 hours of exposure to high temperature and high humidity compared to that after three days of exposure at room temperature, and had excellent high-temperature and high-humidity durability and high elongation sufficient for practical use as an optical display adhesive. On the other hand, the cured product according to Comparative Example 1 had an insufficient curing rate and a significant decrease in adhesive strength under high-temperature and high-humidity conditions, and was inferior in high-temperature and high-humidity durability compared to the cured product according to the examples.

### [Summary]

As shown in Tables 1 to 4, the compositions according to the examples in the present application cured quickly by UV irradiation, and the obtained cured products have sufficient adhesive strength, high-temperature and high-humidity durability, high extensibility, and suppressed yellowing even under high temperatures when used as an adhesive for an optical display and the like. Therefore, it is expected that by using these as an adhesive member (particularly an OCR layer) for optical displays and the like, it will be possible to provide optical devices with excellent reliability and durability.

## Claims

1. A UV-curable silicone composition, comprising:
(A) one or more chain-like organopolysiloxane selected from the following component (A1) and component (A2),
(A1) linear organopolysiloxanes expressed by the following structural formula (I-1) having a methacryloyl group-containing organic group expressed by the following formula (II-1) or (II-2) in a molecule
Structural Formula (I-1): 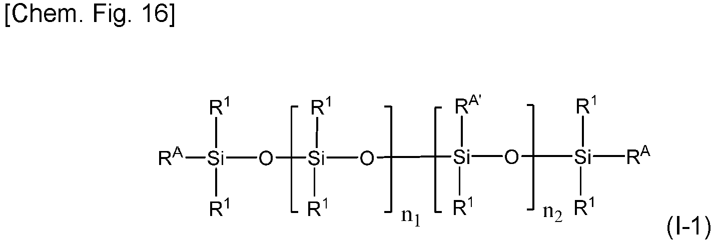
{where R¹ independently represents a C1-C6 alkyl group, a C2-C20 alkenyl group, or a C6-C12 aryl group,
R^{A} independently represents a C1-C6 alkyl group, a C2-C20 alkenyl group, a C6-C12 aryl group, or a methacryloyl group-containing organic group expressed by formula (II-1) or formula (II-2): 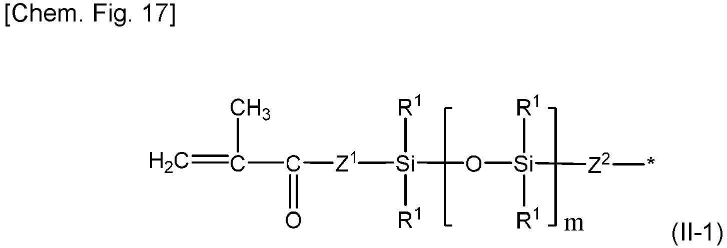
(where m represents a positive number of 1 or more, Z¹ represents - O(CH₂)ₐ- (a represents a number in a range of 0 to 3), and Z² represents a divalent organic group expressed by -(CH₂)_{b}- (b represents a number in a range of 2 to 10) bonded to a silicon atom configuring a main chain of a polysiloxane represented by *) 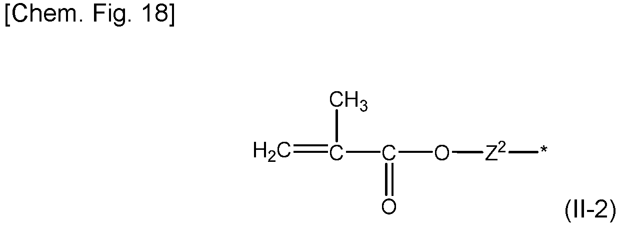
(where Z² represents the same divalent organic group as above)
R^{A'} represents a methacryloyl group-containing organic group expressed by formula (II-1) or formula (II-2) where the value of m + a + b in formula (II-1) is 6 or more or b in formula (II-2) is a number in a range of 6 to 10, which is bonded to a main chain of a polysiloxane via a linking group of a certain chain length or longer,
n1 represents a positive number, and n2 represents 0 or a positive number.
However, if n2 is 0, at least one of R^{A} represents a methacryloyl group-containing organic group expressed by formula (II-1) or formula (II-2).}, and
(A2) branched organopolysiloxanes expressed by the following average unit formula (I-2) having a methacryloyl group-containing organic group expressed by the following formula (II-1) or (II-2) in a molecule and containing a branched siloxane unit
Average unit formula (I-2):
(R^{A}R¹₂SiO_{1/2})ₓ(R¹₂SiO_{2/2})_{y1}(R^{A'}R¹SiO_{2/2})_{y2}(R¹SiO_{3/2})_{z1}(R^{A'}SiO_{3/2})_{z2} (I-2)
(where R¹, R^{A}, and R^{A'} are the same groups as above.
When x, y1, y2, z1, and z2 all satisfy the following conditions of x + y1 + y2 + z1 + z2 = 1, 0 < x ≤ 0.2, 0.3 ≤ y1 + y2 < 1, 0 < z1 + z2 ≤ 0.2, and y2 + z2 = 0, at least one R^{A} represents a methacryloyl group-containing organic group expressed by formula (II-1) or formula (II-2).);
(B) a monofunctional or polyfunctional acrylate compound; and
(C) a photopolymerization initiator, wherein
the ratio [(a)/(b)] of (a) the number of mols of methacroyl groups derived from component (A) to (b) the number of mols of acryloyl groups derived from component (B) in the composition is in a range of 0.1 to 3.0.

2. The UV-curable silicone composition according to claim 1, further comprising (D) an adhesion-imparting agent.

3. The UV-curable silicone composition according to claim 1 or 2, further comprising (E) an organopolysiloxane expressed by the average unit formula (R₃SiO_{1/2})ₚ(R₂SiO_{2/2})_{q}(RSiO_{3/2})ᵣ(SiO_{4/2})ₛ (where R independently represents a group selected from C1-C6 alkyl group, a C2-C20 alkenyl group, a C6-C12 aryl group, or a methacryloyl group-containing organic group expressed by formula (II-1) or formula (II-2), and p, q, r, and s satisfy the following conditions of p + q + r + s = 1, 0 ≤ p ≤ 0.8, 0 ≤ q ≤ 0.4, 0 ≤ r ≤ 0.8, 0 ≤ s ≤ 0.6, and 0.2 ≤ r + s ≤ 0.8).

4. The UV-curable silicone composition according to any one of claims 1 to 3, further comprising (F) a polydimethylsiloxane optionally having an alkenyl group.

5. The UV-curable silicone composition according to any one of claims 1 to 4, wherein R^{A} or R^{A'} represents a methacryloyl group-containing organic group expressed by formula (II-1) above (provided that m + a + b is 6 or higher for R^{A'}).

6. The UV-curable silicone composition according to any one of claims 1 to 5, further comprising (G) a polyfunctional thiol compound having at least two or more thiol groups in a molecule

7. The UV-curable silicone composition according to any one of claims 1 to 6, wherein n1 + n2 in formula (I-1) is in a range of 10 to 1000.

8. The UV-curable silicone composition according to any one of claims 1 to 7, wherein component (B) has less than 20 parts by mass of 100 parts by mass of the total amount of component (A) and component (B).

9. The UV-curable silicone composition according to any one of claims 1 to 8, wherein at least a portion of component (A) is the aforementioned component (A1).

10. The UV-curable silicone composition of any one of claims 1 to 9, wherein the (B) component is 2-ethylhexyl acrylate.

11. The UV-curable silicone composition according any one of claims 1 to 10, which is an optical adhesive or optical pressure-sensitive adhesive.

12. A cured product of the UV-curable silicone composition according to any one of claims 1 to 11.

13. A laminate body, comprising an adhesive layer containing the cured product according to claim 12, which is arranged between a first transparent or non-transparent optical member and a second transparent or non-transparent optical member.

14. An optical device, comprising:
a substrate;
an optical element arranged on the substrate; and
the cured product according to claim 12 for sealing at least a portion of the optical element.

15. An optical display, comprising the laminate body according to claim 13.
